# EUROPEAN PATENT APPLICATION

(11) **EP 2 469 232 A1**
(43) Date of publication of application: **27.06.2012**
(21) Application number: 10196751.1
(22) Date of filing: 23.12.2010
(51) Int. Cl.: G01C 21/36

(54) **Method and apparatus for displaying applications on a mobile device**

(71) Applicant: Research In Motion Limited, Waterloo, ON N2L 3W8 (CA)
(72) Inventor: Sartipi, Siamak, Waterloo Ontario N2L 5Z5 (CA)
(74) Representative: Patel, Binesh

(57) **Abstract**

A method and a mobile device for displaying applications information on the mobile device. One or more applications in communication with corresponding servers are executed on the mobile device. One of the applications or a separate dedicated application provides graphical presentation on the mobile device overlaid on a single map. The single map is received and displayed on the mobile device. The output from another or more applications, based on user's choice, is displayed on the same single map and can interact with the user via application layer over the requested single map.

## Description

### BACKGROUND

The present disclosure relates to displaying applications on a mobile device, and more specifically, to simultaneous displaying data and information from different applications and their select functionalities to interact with enduser on a single map.

Many mobile devices today, for example, the smart phones, are equipped with web browsers or other graphical presentations that allow users of the mobile devices to search for information from the Internet. These mobile graphical presentations are suited for displaying web pages on the relatively small screens of the mobile devices without sacrificing too many of the functionalities.

The graphical presentations and location determination capabilities of the mobile device lead to the development of mobile applications that are interactive, real-time and based on location information of the mobile device.

Accordingly, mobile applications involve some geographic components, and use mapping application to visualize locations and interact with user. For example, people setting up meetings and events often need to negotiate a meeting location. There are usually many issues to consider when making such an arrangement including local amenities, specific settings, nearby freeways, traffic, and personal preferences. Existing methods are not always adequate. For example, people use Loopt^{™} application to see where their friends currently are, then launch another application to see what's happening around them and switch to another application to discuss. If the users do not have detailed knowledge of potential meeting and event locations, they may need to spend time exchanging resources such as maps and travel routes and suggestions over email or instant messaging.

For example, instant messaging applications are generally limited to text exchanges and explanations. Services for meeting with people have been offered by companies like Meetro^{™}, Dodgeball^{™}, and Loopt^{™}, but these operate through alerts and text notification services to mobile devices only when another user is near. Furthermore, Internet relay chat for discussion, for example, does not describe the dynamic integration of content from multiple sources. Graphical presentation of "chat bubbles" as bubbles around text associated with a visual object provide some information of the location, but do not locate instant-messenger conversations over any relevant dynamic context. At the same time, the user may run Trapster^{™} to find the traffic trap on map, another application to find a place to eat while driving and yet another application to let friends now about delay or change in the plan.

The current applications are therefore silo applications and the end users' experience may be separated, discontinued and non-consistent.

In light of the above and other existing problems, there is a need for a method and apparatus which uses an application layer as the integrating presentation and visualization tool and provides an easy and unified experience to the end users.

### BRIEF DESCRIPTION OF THE DRAWINGS

These and other features of the present disclosure will become more apparent from the following description in which reference is made to the appended drawings wherein:
FIG. 1 is a functional block diagram illustrating a mobile device on which embodiments of the present disclosure may be implemented;
FIG. 2 shows a diagram of a system for coordinating a mapping application with a plurality mobile device applications;
FIG. 3 (a) depicts an exemplary mapping application user interface 300 for displaying a plurality of applications on a mobile device;
FIG. 3 (b) shows an interface of the mobile device in accordance with one embodiment of the present disclosure;
FIG. 3 (c) is an illustration of an exemplary application layer;
FIG. 3 (d) shows a contact menu when an application logo on an exemplary application layer is selected;
FIG. 3 (e) shows a reply window in a messaging program;
FIG. 4 (a) illustrates operations that may be performed by a server interacting with the mobile device;
FIG. 4 (b) depicts operations that may be performed by a mobile device interacting with the server; and
FIG. 5 is a process flow chart for coordinating operations of applications on the mobile device and the servers.

### DETAILED DESCRIPTION OF PREFERRED EMBODIMENTS

The present disclosure according to an aspect provides a method for displaying applications on a mobile device. Applications in communication with corresponding servers is executed on the mobile device. A graphical presentation is accessed on the mobile device. A single map and an output from the applications is requested. The output in an application layer overlaid on the requested single map is displayed and the output is adapted for user interaction via the application layer.

In accordance with to another aspect of the present disclosure there is provided a mobile device comprising: a transceiver in communication with servers; applications communicating with the corresponding servers; a processor operative to execute a method comprising: executing the applications; accessing a graphical presentation on the mobile device; requesting a single map; and receiving an output from the applications; and a display operative to display the output in an application layer overlaid on the requested single map; the output being adapted for user interaction via the application layer.

In accordance with to another aspect of the present disclosure there is provided a computer readable storage medium storing instructions or statements for use in the execution in a processor of a method for displaying applications on a mobile device as described above.

In some embodiment, the applications is a selected subset.

In some embodiment, at least one of the applications is a location related application.

In some embodiment, the mobile device is at a point of interest, and the requested single map is related to the point of interest.

In some embodiment, an application is selected for input data. A request based on the input data is sent to a corresponding server; and a reply from the corresponding server is received.

In some embodiment, the graphical presentation is a web page.

In some embodiment, the application layer provides application programming interface to the applications.

In some embodiment, at least one of the applications is context dependent, and the at least one application is provisioned in response to a search request.

In some embodiment, the single map is embedded in the applications.

In some embodiment, the applications are presented as categories, and a category of the applications is selected; and an application from the category is selected.

In some embodiment, the corresponding servers are included in a centralized server.

In some embodiment, targeted advertisement as part of the requested single map is provided.

In some embodiment, the applications are social networking applications.

In some embodiment, the reply includes location related data.

In some embodiment, the web page includes iframes.

In this specification and the appended claims, the singular forms "a," "an," and "the" include plural references unless the context clearly dictates otherwise. Unless defined otherwise, all technical and scientific terms used herein have the same meaning as commonly understood to one of ordinary skill in the art to which this present disclosure belongs.

The term "Global Positioning System", and its abbreviation "GPS" are intended to expansively include any satellite-based navigation-signal broadcast system, and would therefore include other systems used around the world. Furthermore, references herein to "GPS" are meant to include Assisted GPS and Aided GPS.

The term "point-of-interest", and its abbreviation "POI", is intended to describe a specific point location that may be useful or interesting. A point-of-interest may be specified by a GPS, at minimum, through the latitude and longitude of the POI. A name or description for the POI is usually included, and other information such as altitude or a telephone number may also be attached.

A POI may be defined by location-determining systems, for example but not limited to, a radiolocation subsystem that determines its current location using radiolocation techniques. In other words, the location of the mobile device can be determined using triangulation of signals from in-range base towers, such as used for Wireless E911. Radiolocation techniques may include but not limited to: angle of arrival (AOA) which entails locating the caller at the point where signals from two towers intersect; time difference of arrival (TDOA), which uses multilateration like GPS, except that the networks determine the time difference and therefore the distance from each tower; and location signature, which uses "fingerprinting" to store and recall patterns, such as multipath, which mobile phone signals exhibit at different locations in each cell. Radiolocation techniques may also be used in conjunction with GPS in a hybrid positioning system.

The POI may further be determined by calculating the relative distances between the device and multiple Wi-Fi hotspots or a signature of the Wi-Fi network.

The term "carrier" is intended to describe any communication service provider, specifically wireless service provider. The wireless service provider may use any known and future wireless transmission technology which may include, but is not limited to, Code Division Multiple Access (CDMA), Time Division Multiple Access (TDMA), Frequency Division Multiple Access (FDMA), Orthogonal FDMA (OFDMA), Single-Carrier FDMA (SC-FDMA). wireless local area networks (WLANs), broadcast networks. CDMA may include, but is not limited to, cdma2000, Universal Terrestrial Radio Access (UTRA). TDMA may include, but not limited to, technology such as Global System for Mobile Communications (GSM). An OFDMA system utilizes Orthogonal Frequency Division Multiplexing (OFDM) and sends modulation symbols in the frequency domain on orthogonal subcarriers, and may be implemented in technologies such as E-UTRA or E-UTRAN.

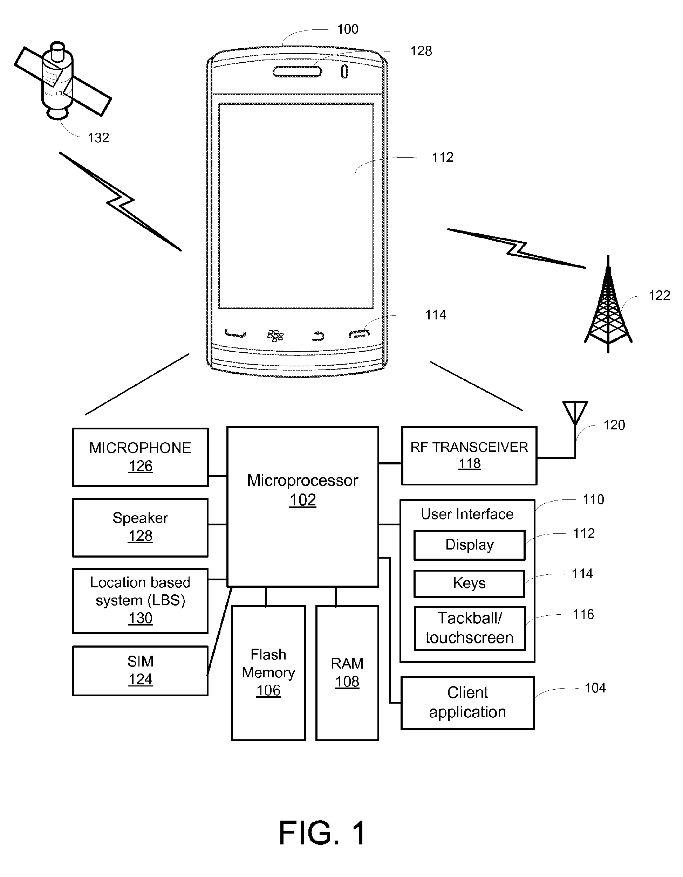

FIG. 1 is a functional block diagram that illustrates a wireless communications device such as a mobile device on which embodiments of the present disclosure may be implemented. As shown by way of example in FIG. 1, the mobile device, which is designated generally by reference numeral 100, includes a processing unit such as a processor or a microprocessor 102 for executing one or more applications 104, computer readable medium in the form of removable or fixed, volatile or non-volatile or permanent or re-writable computer storage media for example, flash memory 106 and/or RAM 108, for storing one or more applications and related data,

The mobile device 100 may further include a user interface 110 with which the user interacts with the device. The user interface 110 may include a display 112 and an input device 114, 116. The display 112 may be a liquid crystal display (LCD) and/or a touch-sensitive display screen. The input device may include a keyboard 114, thumb board, or touch screen 116 that are used to receive data from a user. In addition, input device may also include a plurality of other inputs or controls for adjusting and configuring one or more aspects of the present disclosure including voice commands.

As shown by way of example in FIG. 1, the mobile device 100 includes a radiofrequency (RF) transceiver 118 and associated antenna 120 for wireless communications using any one of known wireless communication protocols. As shown, the transceiver 118 including communication interface may include a plurality of components or operational features that allow the mobile device 100 to transmit search and location data, and retrieve information from the server. The hardware and software necessary for connection to the base station 122 includes, for exemplary purposes only, internal and external components that transmit and receive data wirelessly using a plurality of standard protocols including, for example but not limited to, GSM, CDMA, W-CDMA, Bluetooth, Wi-Fi, IrDA, WiMAX, WiBRO or through other known wireless standards.

For some wireless communication protocols, a SIM card 124 may be provided. Optionally, where the device is a voice-enabled wireless communications device such as, for example, a smart phone or cellular phone, the mobile device 100 may further include a microphone 126 and a speaker 128. The mobile device 100 a location based system module 130. The location based system module 130 may include various data elements and programs suitable for performing the process and calculations outlined above with respect to obtaining location information of the mobile device 100. For example, the location based system module 130 may correspond to a cellular location based system module, while other components of the interface may correspond to Wi-Fi location based system and traditional GPS or enhanced GPS modules, respectively. The location based system module 130 may also contain cached and/or user provided location information.

In accordance with the embodiments of the present disclosure, the mobile device 100 is configured to provide location information. Accordingly, the mobile device 100 comprises a location-determining subsystem, for example but not limited to, GPS 130, in communication with a plurality of satellites 132, for determining a current location of the mobile device. The mobile device 100 may also acquire its location information through other radiolocation techniques such angle of arrival which locates the mobile device 100 at the point where signals from two towers intersect; time difference of arrival, which uses multilateration similar to GPS, but the mobile device 100 determines the time difference and therefore the distance from each tower; location signature, which uses "fingerprinting" to store and recall patterns (such as multipath) which mobile phone signals exhibit at different locations in each cell; calculating the relative distances between the device and multiple Wi-Fi hotspots, receiving a signature of a Wi-Fi network and a combination thereof.

The memory 104, 106 and processor 102 are configured to receive current location data from the location-determining subsystem to the location of the mobile device 100.

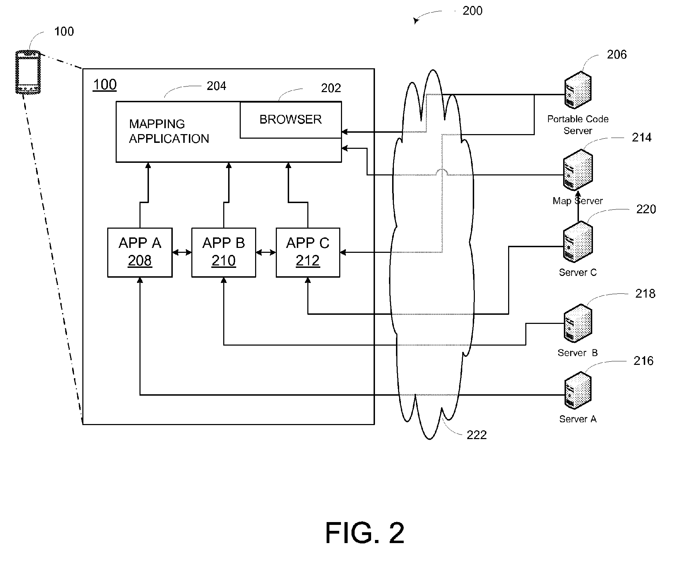

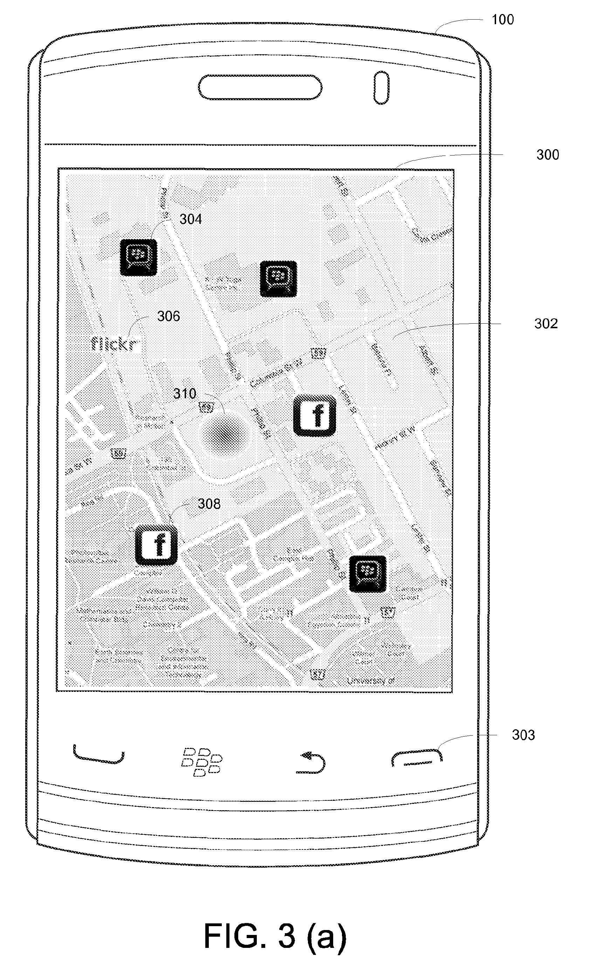

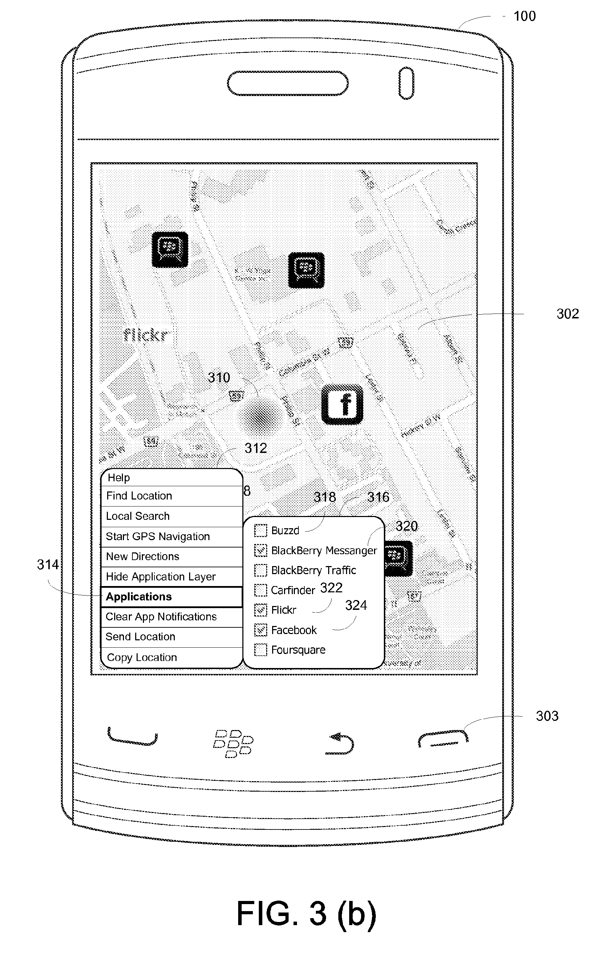

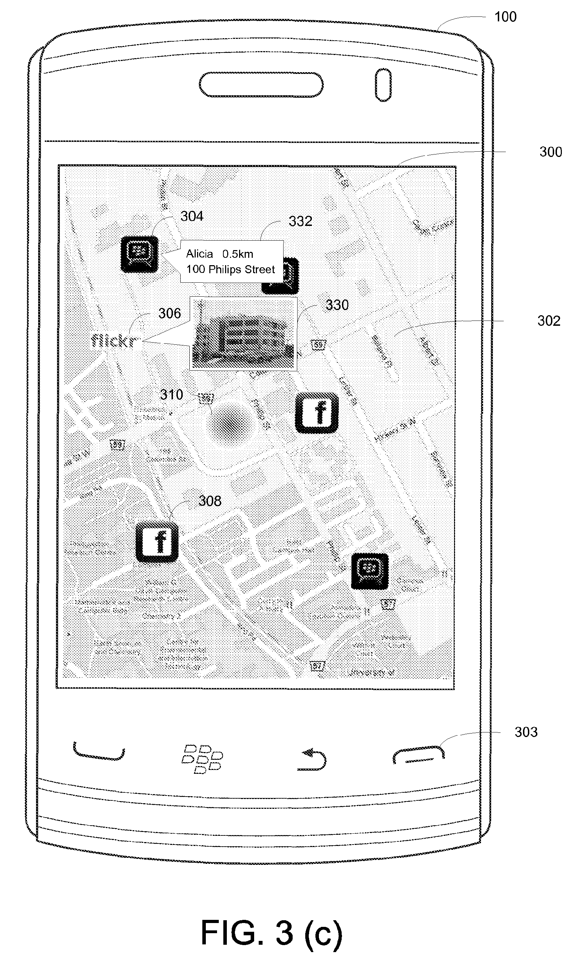

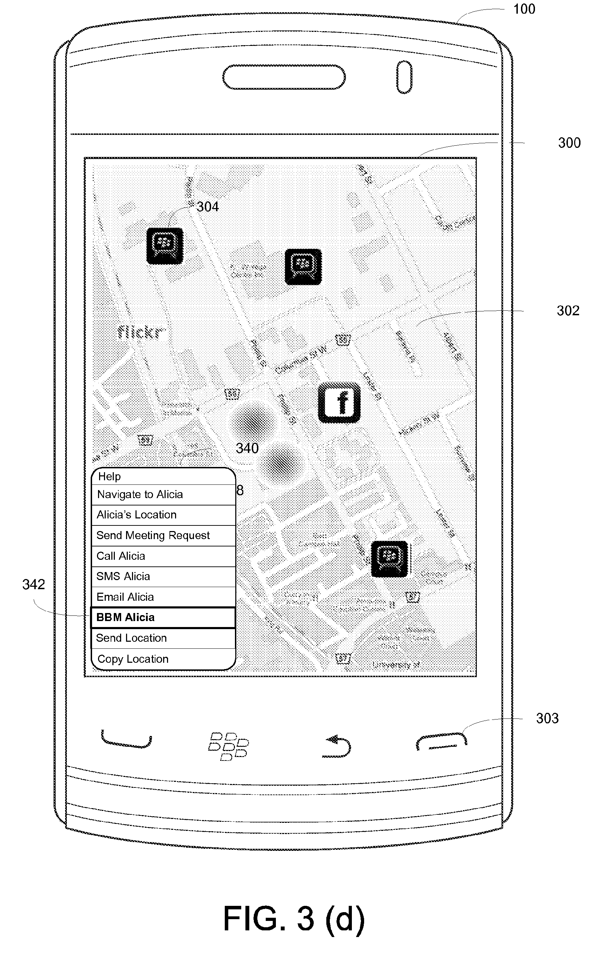

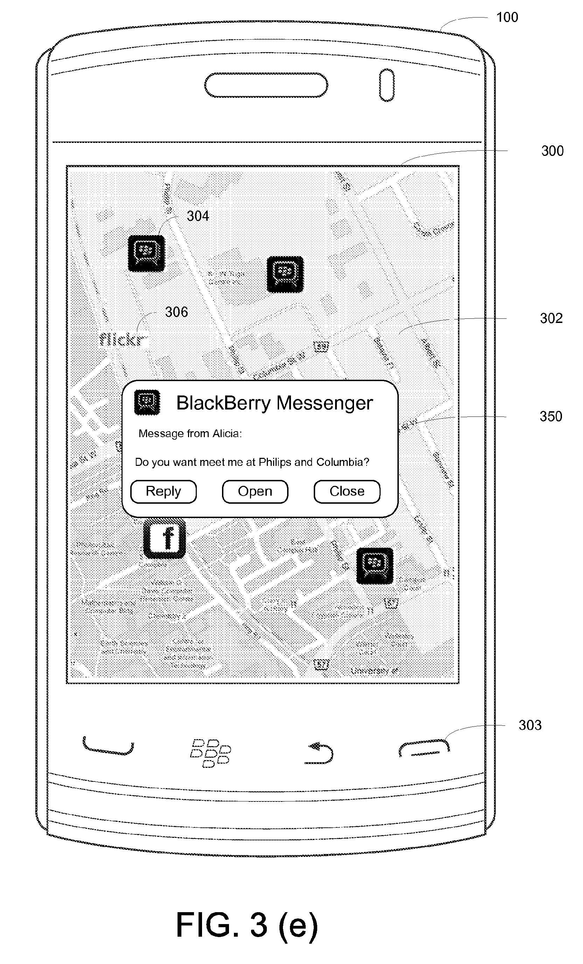

FIG. 2 shows a diagram of a system 200 for coordinating a mapping application with a plurality mobile device applications. In the pictured example, the system 200 comprises a mobile device 100, and a number of servers 206, 214, 216, 218, 220 providing executable code and data for the operation of the mobile device 10. In general, the mobile device 100 is configured to provide functionality like that demonstrated in FIG. 1, with the use of client applications to interact with a mapping application. The mapping application 204 may be one of the client applications provisioned on the mobile device or a dedicated application. In other embodiments, the mapping application 204 may be an ordinary application, for example but not limited to an email application, with embedded maps. As will be described below with regard to FIG. 3, the maping application provides an application layer on the mobile device 100. As a result, a user of mobile device 100 may choose certain modules for providing custom results associated with an application layer, and may then see data formatted for display on the application layer. In some embodiments, the user of the mobile device 100 may access the servers 206, 214, 216, 218, 220 through a carrier (not shown). In other embodiments, the carrier may communicate with the servers through a network.

The mapping application 204 may be, or may include, a web browser 202 or other graphical presentation programs. The web browser may execute mark-up code and other similar code such as JavaScript code that the web browser obtains from various servers to which it may make requests. For example, the portable code server 206 may provide mark-up code for the web browser 202, including code for modules associated with a user of the mobile device 100. For example, the user may have an account associated with the portable code server 206, and may be identified, either via server-side information or via client-side information such as a cookie, by the code server 204, and be provided with a list of applications that the user has previously configured. They may then select one of the maps, and may have code associated with the map delivered for execution on their web browser 202 or map application.

For example, mark-up code may be delivered that may include various forms of HTML code, such as code for generating an application on a display of the mobile device 100. The application may be part of an iframe on a web page represented by a container document. In general, an iframe is an HTML document that may be embedded in another HTML document, using an iframe element. The document in which the iframe is embedded, the container document in this example, may be generated around the iframe while the iframe itself is still being generated. The code for the container document and for the iframe may be provided by portable code server 206 or from other sources.

The mobile device 100 may further include a plurality of applications 208, 210, 212, each of them provide a location coordinate as part of their output data. The mapping application therefore receives map data from a map server 214 resulting from the application output data. As will be discussed below, the mapping application 204 provides a single application display, for displaying the output data from a plurality of the applications.

The applications 208, 210, 212 on the mobile device 100 may communicate with the mapping application 204, with the portable code server 206, and with the other servers 216, 218, 220. The maps server 214 receives requests from the mobile device 100 and provides graphical geographic information, generally in the form of maps, which may be 2D maps, 3D maps, or other forms of maps. In addition, maps server 214 may receive geo-related data from mobile device 100 or from other sources, and may correlate the information with locations on a map, and return the information in a manner so that the mobile device 100 may display the data over the map. The communications between applications 204, 208, 210, 212 executing on the mobile device 100 and the servers 206, 214, 216, 218, 220 may occur according to a published application programming interface (API). The servers 206, 214, 216, 218, 220 may further be in communication with resources including web sites, search engines, data repositories, human agents, directory services, meta search engines, content aggregators, or other information resources available, or combinations thereof.

The servers 206, 214, 216, 218, 220 may be programmed to format data, accessed from local or remote databases or other sources of data, for presentation to the mobile device 100. The servers 206, 214, 216, 218, 220 may utilize various web data interface techniques such as the Common Gateway Interface (CGI) protocol and associated applications, Java^{™} "servlets", Java^{™} applications running on the servers, or the like to present information and receive input from the mobile device 100. The servers may be implemented as, for example, a computer program, and may include a web server module, e.g., Apache^{™} or the like.

The servers 206, 214, 216, 218, 220 may be a centralized facility, for example as a single server, or any or all of its various functions can be distributed across a plurality of facilities or locations in a geographically diverse manner. Further, the various functions described herein as attributable to map information communication can be distributed to and among the various facilities the server 104 services.

The mapping application 204 may provide API to the plurality of applications 208, 210, 212. In general, the mobile device 100 communicates through a carrier or a wireless service provider and a network 222, with a number of servers that provide data for presentation on a map on the mobile device 100. The network 222 may include any public or private, wired or wireless network or combinations thereof.

The applications 208, 210, 212 on the mobile device 100 generate a mapping-related presentation. The applications 208, 210, 212 on the mobile device 100 may be implemented in such a manner so as to permit communication between a first application that is generating a first output, and a second application that is generating a second output for displaying the outputs in the application layer.

FIG. 3 (a) is an illustration of an exemplary mapping application user interface 300 for displaying a plurality of applications on a mobile device 100 according to an embodiment of the present disclosure. FIG. 3 shows an application layer 302 on a mobile device 100, overlaid over a single map 302. According to an embodiment of the present disclosure, the application user interface 300 may include a map, or a soft keyboard. The user may input data using the soft keyboard, by tapping keys on the keyboard 303.

The application layer 302 overlaid on a single map showing the location of the meeting place such as a restaurant or shopping center. The application layer 302 overlaid on a single map may also show approach roads or alternative meeting locations. The application layer 302 includes logos 304, 306, 308 for the different applications providing the outputs on the single map. The logos 304, 306, 308 on the single map indicate the locations of the activities related to their respective applications. For example, logo 304 may indicate a user of BlackBerry Messenger^{™} at a first location. The logo 306 may show the availability of pictures at a second location and logo 308 may show the presence of a friend at a third location. The single map overlaid by the application layer may be dynamically rendered, and furthermore, may be dynamically rendered to show a map area that is under discussion. The location of the user may be indicated by a dot 310 on the single map.

FIG. 3 (b) shows an interface of the mobile device 100 in accordance with one embodiment of the present disclosure. In a menu 312 related to the application layer 302 overlaid on a single map, there are items such as "Send Location", "Start GPS Navigation", "Local Search" available to a user to select. As depicted in FIG. 3 (b), menu item "Application" 314 is selected. The applications listed in the sub menu 316 may be toggled in the application layer 302. In the example shown in FIG. 3(b), applications such as Buzzd^{™} 318 is deselected while applications BalckBerry Messenger^{™} 320, Flickr^{™} 322 and Facebook^{™} 324 are toggled on by the user.

FIG. 3 (c) is an illustration of an exemplary application layer 302, overlaid on a single map, for social communication according to an embodiment of the present disclosure. The application layer 302 consolidates the outputs from different applications such as Flickr^{™}, Facebook^{™} and BlackBerry Messenger^{™} location information onto one single map layer. When a cursor is moved over an icon on the single map of the application layer 302, the icon image may change into a respective display. For example, the cursor moves over icon 306, a picture 330 may be displayed, while moving the cursor over icon 304, the information about the BlackBerry Messenger^{™} user at that location is displayed 332.

For example, Alicia 304 and the user 310 are trying to find a place to meet. They open up the application layer 302 and select a general location. Referring to FIG. 3 (d), when for example logo 304 is selected, a contact menu 340 may become available to the user. The user may select the BlackBerry Messenger^{™} 342 for contacting the user represented by logo 304, i.e. Alicia.

Also referring to FIG. 3 (e), after the user sends a BlackBerry Messenger^{™} message to Alicia, reply from Alicia may be displayed in a BlackBerry Messenger^{™} window 350. For example, she can select a map location 304 by activating or clicking on the icon 306. Once she selects the map location 304, the application layer 302 then highlights the map location 304, for example, by displaying a picture of the location. Alternatively, Alicia may send back a message displayed in a BlackBerry Messenger^{™} window 350.

Users can invite other users to join a chat session. For example, in one embodiment, once Alicia and the user have decided on a location, they can invite their selected friends to the location by organizing a Facebook event.

Referring again to FIGS. 2 and 3 (a), the mobile device 100 initially starts the application layer 302 by requesting, for example, a web page, by a user launching an mapping application, from the maps server 214, or by directing an HTTP request to maps.google.com. The target server, in this example, Google, Inc., may provide the request to a maps server and to one or more other servers. For example, the organization may identify the user of mobile device 100 as a registered member of the organization, such as by querying a cookie stored on mobile device 100 or matching a session ID to a logged in user.

Referring again to FIGS. 2 and 3 (b), the application layer 302 determines that the user has one or more applications 208, 210, 212 toggled on. Therefore, the application layer, overlaid on a single map, 302 accepts the output from the toggled-on application, for example, from BlackBerry Messenger^{™} 320, Flickr 322 and Facebook 324. The maps server 204 may also initially deliver code for a main page, and that code may reference the portable code server 210, such as in the definitions of iframes on the page.

The mobile device 100 may then display the application layer 302, which may include default values displayed on the map, such as by displaying a blank map centered on a current location associated with the user 310. The applications 208, 210, 212 may pass initialization values to the main map page. In some embodiments, the applications 208, 210, 212 on the map page may then be manipulated by the user to identify data to be gathered for display on the map. For example, in a real estate application, the user may select types of homes to display, e.g., attached or single family, and may also select a price range, such as from drop down boxes. After selecting the appropriate parameters, the user may select to submit the parameters, which may cause a request to be generated by the relevant applications, where the request is directed to one of the servers, for example, a location based data server. The location based data server may contains all sorts of data, and may be particularly relevant when the data is associated with a geographical identifier. For example, where real estate listings are sought, the addresses of homes in a database may represent location based information for the listings.

The data may then be returned to the application on the mobile device 100 that requested the data. The data may, in certain implementations, also be provided directly from the location based data server, for example, from Server C 220 to the maps server 214, without passing through the portable program module on the mobile device 100.

When received at the maps server 214, the information may not be appropriately geo-coded. For example, the information may be formatted to describe street addresses. The maps server 214 may thus initially convert the received information into proper geo-coded information, such as by converting street addresses to latitude, longitude pairs. The geo-coded information may then be located relative to the map, and each piece of information may be formatted accordingly. The information may then be passed to the mobile device 100 for display with, and overlaid on, the maps.

In some embodiments, targeted ads may also be provided by the system 200. Those ads may be selected based on words or concepts contained in the geo-related data, which may be initially sent by an ads server, for example Server A 216, along with an indication of the geographic area to be displayed to a user on the map. The ads server 216 may then select appropriate ads directed to the particular concept and the geographic area, and may serve those ads, including by serving them with geo-coded data so that the ads may be placed on the application layer 302, overlaid on a single map, at appropriate locations. For example, the ads server 216 may identify a particular chain of restaurant as being relevant to a user, may convert addresses of various ones of the restaurant chain to a geo-coded format, and may deliver the ads directly to the mobile device 100 or indirectly through the maps server 214, so that the ads are formatted to be received by the mobile device 100 and displayed on the map.

The gathering of information from the application layer 302 on the mobile device 100, the submission of that information to the maps server 214 and other servers 216, 218, 220, and the serving of ads, may all occur, in some embodiments, at least in part while the page associated with the application layer 302 is being loaded. As such, the display created by the application layer 302, such as particular map showing data associated with an application, may be viewable by a user almost immediately upon accessing and loading the associated web page.

The applications 208, 210, 212 may also be provided with additional functionality for accessing information for display on the application layer 302 of the mobile device 100. For example, various functions provided by a language such as JavaScript and JavaFX may also be implemented by the applications 208, 210, 212, thus enabling a rich array of interactions.

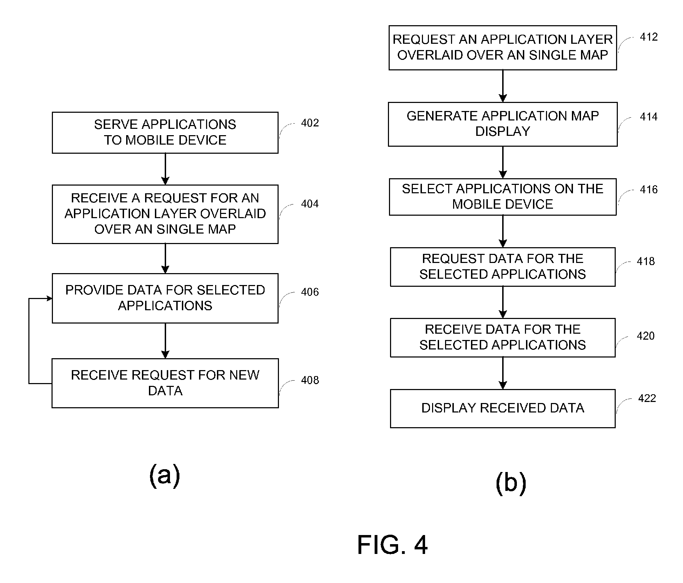

FIG. 4 (a) generally shows operations that may be performed by one or more servers interacting with the mobile device. In operation 402, the servers may initially provide one or more of the applications 208, 210, 212. At 404 the servers may receive a request for an application layer 302 overlaid on a single map in relation to a current location of the user, and may provide the application layer 302 to the mobile device. The servers may further provide code for forming one or more iframes. The requested code may include code for generating iframes which call for another domain. As the code is executed, it may use its default parameters to request maps data associated with the default parameters, such as showing a wide view of a map centered around a user's default or home location.

Subsequently, also referring to FIGS. 2 and 3 (b), a user may have selected one or more of the applications 208, 210, 212, and may have requested that the new data be sent from the corresponding servers 216, 218, 220, to the mobile device for the selected applications 406. Such a request may optionally cause a message to be sent to a third-party server which generally provides additional data to the relevant applications. A response from the third-party server may be processed by and/or routed by the maps server 214 or other servers 216, 218, 220. The maps server may then geo-correlate the received information, such as by converting received addresses to latitude and longitude coordinates, and may serve maps data relating to the request. For example, the maps server may transmit tiles for a map at an appropriate zoom level in an appropriate area, and may also return latitude and longitude information for objects to be displayed in the single map in the application layer 302.

The servers may continue receiving request 408 to update the data for the applications 208, 210, 212. For example, when a new location is displayed on the single map in the application layer 302 of the mobile device 100, the display may be centered to a different location. Accordingly, new photos may be provided by Flickr^{™} application on the mobile device, or new BlackBerry Messenger^{™} users may be displayed in the application layer 302 by BlackBerry messenger^{™}.

FIG. 4 (b) shows a process similar to the process in FIG. 4 (a), but from the viewpoint of the mobile device 100. Also referring to FIGS. 2 and 3 (a)-(e), in operation, at 412, the mobile device initially requests an application layer 302. The maps server 214 will then transmit the application layer 302 overlaid over a single map in response to the request, and may additionally affect the manner in which the code is delivered if it determines that the requester of the code is a registered user of the service. At 414, the mobile device 100 has received the data for the application layer 302 and may generate application layer 302, such as the display 300 as shown in FIG. 3 (a).

At 416, the user selects the applications that provide output to the application layer 302 overlaid over a single map. When the mobile device user interacts with the selected applications, the mobile device may request data relating to the selected applications 418. For example, when the user uses BlackBerry Messenger^{™}, the user may send a message to the BlackBerry Messenger^{™} server, and receives a reply from the corresponding server 420. The mobile device 100 then displays 422 the received data.

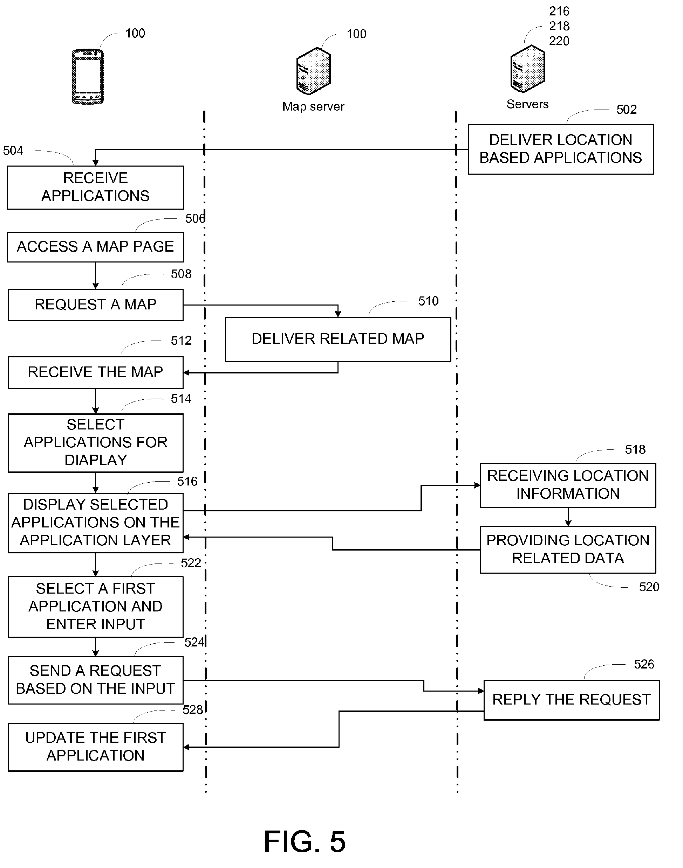

FIG. 5 is a process flow chart for coordinating operations of applications on the mobile device and the servers.

Referring to FIGS. 2 and 5, in operation, at 502, one or more location related applications 208, 210, 212 may be delivered to the mobile device 100. The delivery may take place, for example but not limited to, after receiving a request from the user of the mobile device 100, as part of an initial provisioning of the mobile device or during execution of other applications on the mobile device.

At 504, the mobile device 100 received the requested application. The one or more location related applications 208, 210, 212 may be executed on the mobile device as running application, or launched at the request of the user or called by other applications.

At 506, a user initially accesses a map-related page. The map-related page may be a map of a location related application or a web page. A request 508 for a map, for example but not limited to, related to the current user location, is sent to the map server 214. The map server 214 transmits 510 the map that is of interest to the user. In some embodiments, the user may be at a point of interest (POI), in this case the map is related to the current location of the user. In some embodiments, a detailed map may be delivered, in other embodiments, an general overview map may be the initial display. The map server 214 may also deliver other data related to map data, which may include maps-related libraries. The provision of maps information may be generated by a single server, or a plurality of servers. The information provided by the maps server may include a list of possible applications to be used by a user.

In some embodiments, the corresponding location related applications may be context-dependent. For example, the provision of the location related application may have occurred in response to a search request, and analysis of terms in the search request may indicate that a certain type of functionality is desired with respect to the map, so that applications addressing that functionality are displayed with the general map. The applications may thus be provided with the map. Further, in some embodiments, the map may be positioned in a manner relevant to the search request, for example, around the user location and/or default values for the applications may be selected based on the search request. Alternatively, a user database may be consulted to determine applications that have previously been selected by a particular user, and may be displayed again, as part of a personalized maps page.

After receiving and displaying the related map 512, at 514, the user may select one or more of the location related applications to be displayed 516 on the single map of the application layer 302 of the mobile device 100. In some embodiments, no applications have previously been selected. Instead, the user is provided with a display of a number of available applications. The applications may be arranged in categories, and a user may select one of the categories, and then further be provided with controls for selecting particular applications that are in the selected category. Alternatively, a user database may be consulted to determine applications that have previously been selected by a particular user, and may be displayed again, as part of a personalized maps page.

Once the selected applications are displayed on the mobile device 100, the location of the mobile device may be provided 518 to the corresponding servers which are in communication with the selected applications, in order to receive an update of the location related data 520.

At 522, the user elects to use a particular application, for example but not limited to by selecting an icon on the application layer 302, and input data, for example but not limited to, through a pop-up window on the mobile device 100. The request may be sent 524 to the server communicating with the selected application, which then returns 526 data responsive to the submitted request.

Subsequently, the user may choose to use another location related application, in effect, by selecting another application on the application layer 302. A similar process may occur as occurred for the first application, with the request for and service of data, the subsequent displaying of the received data at the application layer 302 of the mobile device. Such display may occur along with the prior display from the interaction with the first application. As a result, a user may be able to select a plurality of applications and to generate a single map display that combines information from the applications.

While the present disclosure is described in conjunction with the specific embodiments, it will be understood that it is not intended to limit the present disclosure to the described embodiments. On the contrary, it is intended to cover alternatives, modifications, and equivalents as may be included within the scope of the present disclosure as defined by the appended claims. In the above description, numerous specific details are set forth in order to provide a thorough understanding of the present disclosure. The present disclosure may be practiced without some or all of these specific details. In other instances, well-known process operations have not been described in detail in order not to unnecessarily obscure the present disclosure.

It is further understood that the use of relational terms such as first and second, and the like, if any, are used solely to distinguish one from another entity, item, or action without necessarily requiring or implying any actual such relationship or order between such entities, items or actions.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function (s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Some portions of the detailed description in the above are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

An algorithm is generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Unless specifically stated otherwise, as apparent from the above discussions, it is appreciated that throughout the specification discussions utilizing terms such as "processing," "computing," "calculating," "determining," or the like, refer to the action and/or processes of a computer or computing system, or similar electronic computing media player device, that manipulate and/or transform data represented as physical, such as electronic, quantities within the computing system's registers and/or memories into other data similarly represented as physical quantities within the computing system's memories, registers or other such information storage, transmit session or display devices.

Embodiments within the scope of the present disclosure can be implemented in digital electronic circuitry, or in computer hardware, firmware, software, or in combinations thereof. Apparatus within the scope of the present disclosure can be implemented in a computer program product tangibly embodied in a machine-readable storage medium for execution by a programmable processor; and method actions within the scope of the present disclosure can be performed by a programmable processor executing a program of instructions to perform functions of the present disclosure by operating on input data and generating output. Embodiments within the scope of the present disclosure may be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object oriented programming language, or in assembly or machine language if desired; and in any case, the language can be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files. Embodiments within the scope of the present disclosure include computer-readable media for carrying or having computer-executable instructions, computer-readable instructions, or data structures stored thereon. Such computer-readable media may be any available media, which is accessible by a general-purpose or special-purpose computer system. Examples of computer-readable media may include physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system. Any of the foregoing can be supplemented by, or incorporated in, ASICs (application-specific integrated circuits). It should be understood that embodiments of the present disclosure may be used in a variety of applications. Although the present disclosure is not limited in this respect, the methods disclosed herein may be used in many apparatuses such as in the transmitters, receivers and transceivers of a radio system. Radio systems intended to be included within the scope of the present disclosure include, by way of example only, cellular radiotelephone communication systems, satellite communication systems, two-way radio communication systems, one-way pagers, two-way pagers, personal communication systems (PCS), personal digital assistants (PDA's), notebook computers in wireless local area networks (WLAN), wireless metropolitan area networks (WMAN), wireless wide area networks (WWAN), or wireless personal area networks (WPAN, and the like).

## Claims

1. A method for displaying applications on a mobile device (100):
executing a plurality of applications (208, 210, 212); the plurality of applications in communication with a plurality of corresponding servers (206, 214, 216, 218, 220);
accessing (506) a graphical presentation (300) on the mobile device (100);
requesting (508) a single map and an output from the plurality of applications (208, 210, 212); and
displaying (512) the output in an application layer (302) overlaid on the requested single map; the output being adapted for user interaction via the application layer (302).

2. The method according to claim 1, wherein the plurality of applications (208, 210) is a subset of a second plurality of applications (208, 210, 212), further comprising:
selecting (514) the plurality of the applications (208, 210) from the second plurality of applications (208, 210, 212).

3. The method according to any one of claims 1 and 2, wherein at least one of the plurality of applications (208, 210, 212) is a location related application.

4. The method according to any one of claims 1 to 3, wherein the mobile device (100) is at a point of interest (310), and the requested single map is related to the point of interest.

5. The method according to any one of claims 1 to 4, further comprising:
selecting (522) an application from the plurality of the applications (208, 210) and input data into the selected application;
sending a request (524) based on the input data to a corresponding server of the plurality of corresponding servers (206, 214, 216, 218, 220);and
receiving (528) a reply from the corresponding server.

6. The method according to any one of claims 1 to 5, wherein the graphical presentation is a web page.

7. The method according to claim 5, wherein the application layer (302) provides application programming interface to the plurality of applications (208, 210, 212).

8. The method according to any one of claims 1 to 7, wherein at least one of the plurality of applications (208, 210, 212) is context dependent, further comprising:
provisioning the at least one application in response to a search request.

9. The method according to claim 8, wherein the single map is embedded in the at least one of the plurality of applications (208, 210, 212).

10. The method according to any one of claims 1 to 9, wherein the plurality of applications (208, 210, 212) is presented as categories, further comprising:
selecting a category of the applications; and
selecting an application from the category of the applications.

11. A mobile device (100) comprising:
a transceiver (118) in communication with a plurality of servers (206, 214, 216, 218, 220);
a plurality of applications (208, 210, 212) communicating with the corresponding servers (206, 214, 216, 218, 220);
a processor (102) operative to execute a method comprising:
executing the plurality of applications (208, 210, 212);
accessing (506) a graphical presentation (300) on the mobile device (100);
requesting (508) a single map; and
receiving an output from the plurality of applications (208, 210, 212); and
a display (112) operative to display (512) the output in an application layer (302) overlaid on the requested single map; the output being adapted for user interaction via the application layer (302).

12. The mobile device (100) according to claim 11, wherein the plurality of applications (208, 210) is a subset of a second plurality of applications (208, 210, 212), the method further comprising:
selecting (514) the plurality of the applications (208, 210) from the second plurality of applications (208, 210, 212).

13. The mobile device (100) according to any one of claims 11 and 2, wherein at least one of the plurality of applications (208, 210, 212) is a location related application.

14. The mobile device (100) according to any one of claims 11 to 13, the method further comprising:
selecting (522) an application from the plurality of the applications (208, 210) and input data into the selected application;
sending a request (524) based on the input data to a corresponding server of the plurality of corresponding servers (206, 214, 216, 218, 220);and
receiving (528) a reply from the corresponding server.

15. A computer readable storage medium storing instructions or statements for use in the execution in a processor of a method for displaying applications on a mobile device (100), the method comprising:
executing a plurality of applications (208, 210, 212); the plurality of applications in communication with a plurality of corresponding servers (206, 214, 216, 218, 220);
accessing (506) a graphical presentation (300) on the mobile device (100);
requesting (508) a single map and an output from the plurality of applications (208, 210, 212); and
displaying (512) the output in an application layer (302) overlaid on the requested single map; the output being adapted for user interaction via the application layer (302).
